(19) Europäisches Patentamt
European Patent Office
Office européen des brevets

(11) **EP 2 450 823 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
*G06K 7/08* (2006.01)  *G06K 19/073* (2006.01)
*G07F 19/00* (2006.01)  *G07F 7/10* (2006.01)
*G01F 23/296* (2006.01)  *H03F 3/24* (2006.01)
*H03G 3/30* (2006.01)  *G01S 13/36* (2006.01)

(21) Anmeldenummer: **10190003.3**

(22) Anmeldetag: **04.11.2010**

(54) **Detektion eines an einem für die Authentifizierung verwendeten Eingabemittel angebrachten Fremdkörpers**

detecting a foreign body in the vicinity of a means of input used for authentification

Détection d'un corps étranger installé à proximité d'un agent d'entrée de données utilisé pour l'authentification

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.05.2012 Patentblatt 2012/19**

(73) Patentinhaber: **KEBA AG**
**4041 Linz (AT)**

(72) Erfinder:
• **Schimbäck Erwin**
**4310 Mauthausen (AT)**

• **Lehner, Christian**
**4490 Sankt Florian (AT)**

(74) Vertreter: **Horn Kleimann Waitzhofer**
**Elsenheimerstrasse 65**
**80687 München (DE)**

(56) Entgegenhaltungen:
**DE-A1- 19 739 771    DE-A1-102005 030 345
US-A1- 2004 026 507    US-B1- 6 367 695
US-B1- 6 390 367    US-B1- 6 693 598
US-B2- 7 305 934    US-B2- 7 479 921
US-B2- 7 798 395**

## Beschreibung

TECHNISCHES GEBIET

Das technische Gebiet der Erfindung betrifft die Detektion eines im Nahbereich eines für die Authentifizierung verwendeten Eingabemittels angebrachten Fremdkörpers, insbesondere die Detektion eines in einen Dienstleistungsautomaten eingeführten oder daran angebrachten Fremdkörpers zum Ausspähen von Identifikations- und Autorisierungsinformationen oder zum Manipulieren des Dienstleistungsautomaten oder von mit dem Dienstleistungsautomaten interagierenden Einrichtungen, wie zum Beispiel Magnetstreifenkarten.

STAND DER TECHNIK

Ein solcher Angriff zum Ausspähen oder Manipulieren eines Dienstleistungsautomaten oder einer mit dem Dienstleistungsautomaten interagierenden Einrichtung zum Zweck der widerrechtlichen Erlangung von Autorisierungsinformationen wird auch als Skimming-Angriff bezeichnet.

Beispielsweise wird bei einem Skimming-Angriff auf einen Dienstleistungsautomaten, wie beispielsweise einem Geldautomaten, dieser von Dritten so manipuliert, dass im Bereich des Karteneingabemauls des Geldautomaten ein unerlaubtes oder fremdes Lesegerät angebracht wird, das vom Benutzer des Geldautomaten kaum oder gar nicht als solches wahrgenommen wird. Durch das Lesegerät werden die auf der Karte oder Magnetstreifenkarte gespeicherten Daten, insbesondere Magnetstreifendaten, unbemerkt während dem normalen Gebrauch am Automaten ausgelesen bzw. mitgelesen und an eine mit dem Lesegerät gekoppelten Einrichtung gesendet oder im Lesegerät zwischengespeichert, um sie zu einem späteren Zeitpunkt nach Entfernen des Lesegeräts vom Automaten auszulesen. Des Weiteren wird die zu der Karte gehörige PIN ausgespäht. Hierzu wird beispielsweise eine Kamera eingesetzt und die PIN-Eingabe auf der Tastatur mitgefilmt. Der Angreifer nutzt die ausgespähten Informationen zum Anfertigen und Verwenden einer Kartenkopie und erhält damit unerlaubt Zugriff oder Zutritt auf Konten bzw. zu Sicherheitsbereichen.

Eine Skimming-Einrichtung kann sich beispielsweise in der Front des Geldautomaten, in einem zusätzlichen Magnetkartenleser, dem Kartenmaul oder im Kartenlesegerät befinden. Beispiele für solche Fremdkörper oder Skimming-Einrichtungen sind Magnetköpfe, Spulen oder Mikrofone. Ebenso können Tastaturen für die Eingabe einer PIN mit einem nicht als solchen erkennbaren Tastaturduplikat abgedeckt sein, durch welches die PIN-Eingabe eines Benutzers unbemerkt und widerrechtlich erfasst bzw. aufgezeichnet wird.

Die Druckschrift EP 0 015 920 B1 beschreibt ein Verfahren zum Feststellen der Anwesenheit oder Abwesenheit eines Mikrowellen reflektierenden Bestandteils eines Gegenstands demgemäß Mikrowellen vorgegebener Frequenz erzeugt werden. Dabei wird ein Ausgabeort dieser Mikrowellen definiert. Weiters wird ein Abstandsbereich von diesem Ausgabeort vorgegeben, der die Wellenlänge einer stehenden Welle der Mikrowellenenergie der vorgegebenen Frequenz übersteigt und in den der Mikrowellen reflektierende Bestandteil während des Feststellvorgangs gebracht wird. Von dem Bestandteil reflektierte Mikrowellen werden empfangen und deren Amplituden werden ermittelt. Die stehende Welle dieser Mikrowellenenergie wird von ihrem üblichen zyklischen sinusförmigen Verlauf eines Kennwerts ab dem Ausgabeort in einen Verlauf verformt, der am Ausgabeort einen Maximalwert und einen innerhalb eines genannten Abstandsbereichs an dessen bezogen auf den Ausgabeort äußeren Ende liegenden ersten Minimalwert aufweist, wobei letzterer einen Schwellwert darstellt, so dass innerhalb des genannten Bereichs dieser Minimalwert nicht zu reflektierten Werten führen kann, welche größer sind als er selber und außerhalb des genannten Bereichs keine Werte auftreten, welche den Schwellwert übersteigen.

Die Druckschrift US 5,459,405 A zeigt ein Verfahren und eine Vorrichtung zum Detektieren der Anwesenheit eines Objektes unter Verwendung von Nahfeldeffekten.

Die Druckschrift EP 0 561 124 B1 beschreibt eine Einrichtung und ein Verfahren zur Feststellung von Betrugsversuchen durch Anschließen einer elektrischen Leitung an einem Anschlusspunkt einer Chip-Karte in einer Vorrichtung zum Lesen und Beschreiben eines Speichers der Chip-Karte. Die Einrichtung hat eine Messeinrichtung und eine Resonanzeinheit mit einem an dem Anschlusspunkt gekoppelten Resonator, dessen elektrische Eigenschaften durch die unerlaubt angebrachte Zuleitung veränderbar und durch die Messeinrichtung erfassbar sind.

Ein Beispiel für die Auswertung von Sensorsignalen bei einem Selbstbedienungsterminal ist in der Druckschrift EP 1 844 454. WO 2006/79769 und US 2006/0169764 beschrieben.

Die Druckschrift US 7 479 921 B2 beschreibt eine Abstandsmesseinrichtung. Die Abstandsmesseinrichtung hat eine Sendequelle mit einem VCO, eine Übertragungseinheit, eine Detektiereinheit und eine Signalverarbeitungseinheit.

Dabei weist die Abstandsmesseinrichtung einen bidirektionalen Koppler zwischen der Übertragungseinheit und der Sendequelle bzw. der Detektiereinrichtung auf. Das Ausgangssignal des VCO wird sowohl der Übertragungseinheit als auch der Detektiereinrichtung zugeführt. Weiter detektiert der bidirektionale Koppler eine reflektierte Welle R, welche durch die Antenne der Übertragungseinheit empfangen wurde, und stellt die detektierte reflektierte Welle R einem der Multiplizierer und der Detektiereinrichtung bereit.

Des Weiteren wird eine Phasendetektion durch Multiplizieren der reflektierten Welle R mit einem Signal, das mit dem Übertragungssignal synchronisiert ist, durchgeführt.

Die US 6 367 695 B1 beschreibt ein Selbstbedienungsterminal mit einem Emitter/Detektor-System. Dabei sind der Emitter und der Detektor so angeordnet, dass ein unzulässig eingebrachtes Objekt die Emissionen zwischen Emitter und Detektor stört und somit das unzulässig eingebrachte Objekt detektiert werden kann. Beispielsweise werden hierzu Mikrowellen eingesetzt.

Die Druckschrift US 2004/026507 A1 zeigt einen Geldautomaten mit einem Detektor zur Detektion unzulässig eingebrachter Fremdkörper. Ein solcher unzulässig eingebrachter Fremdkörper kann beispielsweise ein Magnetkopf sein. Als Detektor wird beispielsweise ein Mikrowellensensor verwendet.

Zirkular polarisierte Patch-Antennen zur Erzeugung einer stehenden Welle sind beispielsweise aus US 7,305,934 oder aus US 6,693,598 bekannt.

Ein weiteres herkömmliches Selbstbedienungsterminal zeigt die US 6,390,367 A. Ein weiterer Geldautomat mit der Möglichkeit einer Betrugsverhinderung ist in der Druckschrift US 7,240,827 B2 beschrieben.

OFFENBARUNG DER ERFINDUNG

Eine Aufgabe der vorliegenden Erfindung besteht darin, eine Lösung zur Detektion eines im Nahbereich eines für die Identifizierung und/oder Authentifizierung verwendeten Eingabemittels unerlaubt angebrachten Fremdkörpers zu schaffen.

Insbesondere ist es eine Aufgabe der vorliegenden Erfindung, eine lösung zur Detektion von in einem Dienstleistungsautomaten unerlaubt angebrachten Fremdkörpern oder Ausspäh-Einrichtungen, welche sich im Nahbereich der Eingabemittel für die Eingabe von Identifikations- und/oder Autorisierungsinformationen befinden, zu schaffen.

Die Erfindung ist in den unabhängigen Ansprüchen definiert.

Bevorzugte Ausführungsbeispiele ergeben sich aus den abhängigen Ansprüchen.

Demgemäß wird eine Vorrichtung zur Detektion eines im Nahbereich eines für die Identifizierung und/oder Authentifizierung verwendeten Eingabemittels angebrachten Fremdkörpers vorgeschlagen, wobei die Vorrichtung zumindest einen Koppler aufweist Dabei ist der Koppler dazu eingerichtet, ein oszillierendes Signal den beiden Eingängen einer Antenne zur Erzeugung einer stehenden Welle phasenverschoben zuzuführen, das oszillierende Signal phasenverschoben und mit einem vorbestimmten Pegel einer Erfassungseinrichtung zuzuführen und ein mittels der Antenne empfangenes Reflexionssignal für die Erfassungseinrichtung auszukoppeln. Welters ist der Koppler dazu eingerichtet, einen Phasenunterschied zwischen dem zugeführten oszillierenden Signal mit dem vorbestimmten Pegel und dem ausgekoppelten Reflexionssignal zur Detektion des Fremdkörpers zu erfassen.

Die Antenne ist als Patch-Antenne zur Erzeugung einer stehenden, zirkular polarisierten Welle ausgebildet Dadurch wird eine hohe richtungsunabhängige Empfindlichkeit im gesamten Erfassungsbereich der Vorrichtung erreicht

Zur Erzielung der konstanten Abstrahlcharakteristik ist der Öffnungswinkel der Antenne so ausgebildet, dass er den gesamten Erfassungsbereich der Vorrichtung abdeckt.

Die Antenne ist vorzugsweise für den gesamten verwendeten Frequenzbereich des ISM-Bandes durchlässig ausgestaltet.

Die Vorrichtung kann auch als Anti-Skimming-Vorrichtung, als Stehwellensensor-Vorrichtung oder als Stehwellensensor bezeichnet werden.

Die Vorrichtung ist für Eingabemittel geeignet, welche zur Identifizierung und Authentifizierung von Nutzern eingerichtet sind. Allerdings ist die Vorrichtung auch für Eingabemittel geeignet, welche zur Identifizierung oder Authentifizierung von Nutzern eingerichtet sind.

Die Vorrichtung ist insbesondere dazu eingerichtet, Eingabemittel von Authentifizierungssystemen und/oder Identifizierungssystemen hinsichtlich Manipulationen zu überwachten. Das Eingabemittel ist derart eingerichtet, dass durch einen Nutzer eine Eingabe zur Identifizierung oder Authentifizierung des Nutzers eingegeben werden kann. Beispiele für Eingabemittel sind Tastaturen, insbesondere PIN-Tastaturen, Iris-Scanner, Finger-Scanner oder dergleichen. Weiters kann ein solches Identifizierungssystem Teil eines Dienstleistungsautomaten sein.

Des Weiteren wird ein Eingabemittel vorgeschlagen, welches zumindest eine wie oben erläuterte, baulich integrierte Vorrichtung zur Detektion eines im Nahbereich eines Eingabemittels eines Identifizierungssystems oder eines Authentifizierungssystems angebrachten Fremdkörpers aufweist.

Ferner wird ein Dienstleistungsautomat vorgeschlagen, der zumindest eine wie oben erläuterte Vorrichtung zur Detektion eines im Nahbereich eines Eingabemittels des Dienstleistungsautomaten angebrachten Fremdkörpers aufweist.

**Weiterhin wird ein entsprechendes Verfahren vorgeschlagen.**

Weiters wird ein Computerprogrammprodukt vorgeschlagen, welches auf einer programmgesteuerten Einrichtung die Durchführung zumindest eines Teils des wie oben erläuterten Verfahrens zur Detektion eines im Nahbereich eines für die Identifizierung und/oder Authentifizierung verwendeten Eingabemittels angebrachten Fremdkörpers veranlasst. Der zumindest eine Teil, der als Computerprogrammprodukt ausgeführt ist, umfasst insbesondere den Schritt des Erfassens des Phasenunterschieds zwischen dem zugeführten oszillierenden Signal mit dem vorbestimmten Pegel und dem ausgekoppelten Reflexionssignal.

Ein Computerprogrammprodukt wie ein Computerprogramm-Mittel kann beispielsweise als Speichermedium, wie Speicherkarte, USB-Stick, Floppy, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen.

Die Vorrichtung ist dazu ausgelegt, im Nahbereich der Vorrichtung ein elektromagnetisches Feld mittels einer stehenden Welle zu erzeugen und eine Veränderung des erzeugten elektromagnetischen Feldes aufgrund einer Reflexion an einem elektromagnetisch reaktiven Material eines in oder an einem Teil des Dienstleistungsautomaten unerlaubt angeordneten Fremdkörpers, insbesondere einer Ausspäheinrichtung, zu detektieren.

Dabei können zusätzlich angebrachte Lese- oder Abtasteinrichtungen erkannt werden, welche nicht notwendigerweise in den Automaten eingeführt sein müssen, sondern ebenso außen angebracht oder vorgesetzt sein können.

Durch den Einsatz der stehenden Welle ist die Vorrichtung in der Lage, Fremdkörper oder Objekte im Nahbereich der Antenne der Vorrichtung zu detektieren. Die Vorrichtung arbeitet insbesondere im Mikrowellenbereich. Dabei werden Arbeitsfrequenzen von beispielsweise 5,8 GHz im ISM-Band (ISM-Band: Industrial, Scientific and Medical Band) eingesetzt.

Durch Einbringen oder Entfernen von elektromagnetisch reaktiven Materialien in das Nahfeld der Antenne der Vorrichtung wird diese verstimmt und deren Impedanz für die eingestellte Sendefrequenz verändert. Dadurch ändert sich der reflektierte Signalanteil, insbesondere dessen Amplitude oder Pegel, am entsprechenden Ausgang des Kopplers. Insbesondere werden dadurch in betrügerischer Absicht zusätzlich angebrachte Fremdkörper, wie Manipulationseinrichtungen oder Ausspäheinrichtungen, sensorisch erfasst.

Ein zu überwachendes Teil des Dienstleistungsautomaten im Sinne der vorliegenden Anmeldung ist jedes Teil des Dienstleistungsautomaten, welches ein potenzielles Angriffsziel für betrügerische Manipulationen zum unerlaubten Ausspähen sicherheitsrelevanter Daten, insbesondere Autorisierungsdaten, darstellt. Solche Teile oder Automatenteile sind insbesondere der Bereich eines Kartenlesers zum Zuführen einer Magnetkarte oder ein PIN-Pad zur Eingabe eines PIN-Codes.

In Abhängigkeit des bestimmten Phasenunterschiedes kann ein Ergebnissignal zur Detektion eines in dem Dienstleistungsautomaten eingeführten Fremdkörpers bereitgestellt werden. Dieses Ergebnissignal wird insbesondere mittels eines AD-Wandlers digitalisiert und einer nachgeschalteten Auswerteeinheit zugeführt.

In der Auswerteeinheit erfolgt insbesondere eine Bewertung und Plausibilisierung des Ergebnissignals oder der Ergebnissignale, eine Filterung und eine Korrektur zur Kompensation der nicht auf Manipulationen zurückzuführenden Änderungen, insbesondere Phasenunterschiede in Folge von Veränderungen aufgrund sich ändernder Umgebungsbedingungen, insbesondere Temperatur und Luftfeuchtigkeit. Des Weiteren werden durch die Auswerteeinheit kurzfristige Signaländerungen während zulässiger Aktionen und Bedienvorgänge am Dienstleistungsautomaten, z.B. beim Abheben von Bargeld, herausgefiltert.

Die Auswerteeinheit kann beispielsweise als ein eigenständiges Modul mit einer eigenen Prozessoreinheit ausgeführt sein. Die Auswerteeinheit kann aber auch als ein Software-Modul in der Automatensteuerung des Dienstleistungsautomaten integriert sein.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Ausgestaltung ist der Koppler als ein Richtkoppler ausgebildet.

Gemäß einer weiteren bevorzugten Ausgestaltung ist die Erfassungseinrichtung als ein Demodulator, insbesondere als ein Hüllkurven-Demodulator, ausgebildet. Der Erfassungsvorrichtung wird dabei insbesondere ein Summensignal zur Verfügung gestellt und dann dessen Amplitude oder Amplitudenänderung erfasst. Der Einfluss des Phasenunterschieds erfolgt bereits im Koppler bei der Erzeugung des Summensignals.

Gemäß einer bevorzugten Weiterbildung ist ein Oszillator zur Bereitstellung des oszillierenden Signals vorgesehen, welcher mit dem Koppler gekoppelt ist. Beispielsweise erzeugt der Oszillator einen unmodulierten Träger als oszillierendes Signal, welches im verwendeten Frequenzbereich einen konstanten Pegel aufweist. Vorzugsweise ändert sich dieser erzeugte unmodulierte Träger infolge von Temperaturschwankungen nur sehr gering. Der Oszillator ist vorzugsweise im verwendeten Frequenzbereich frequenzstabilisiert.

Des Weiteren ist der Oszillator vorzugsweise abstimmbar und/oder kalibrierbar. Eine exemplarabhängige Abstimmung auf eine optimale Empfindlichkeit der Vorrichtung zum Ausgleich von Exemplarstreuungen der Leiterplatten oder der verwendeten Bauteile ist damit ermöglicht.

Des Weiteren wird vorzugsweise eine Transceiver-Einrichtung eingesetzt. Diese Transceiver-Einrichtung ist insbesondere durch einen Quarz und eine interne Phasenregelschleife (PLL: Phase-Locked Loop) frequenzstabilisiert und liefert einen konstanten Ausgangspegel von beispielsweise bis zu +21 dBm. Der Ausgangspegel schwankt über Frequenz und Temperatur maximal um 3 dB. Der Ausgangspegel ist insbesondere einstellbar. Wie oben bereits ausgeführt, arbeitet der Transceiver vorzugsweise im 5,8 GHz ISM-Band (5,725 GHz bis 5,875 GHz). Innerhalb dieses Frequenzbandes sind vorzugsweise mehrere unterschiedliche Frequenzen, insbesondere über interne Register, einstellbar.

Der Einsatzbereich der Vorrichtung hängt insbesondere von der eingesetzten Frequenz f und der Entfernung der Objekte ab.

Die Wellenlänge λ bei einer Frequenz von 5,8 GHz beträgt in Luft 51,72 mm (siehe untenstehende Gleichung):

$$\lambda = \frac{c}{f} = \frac{3 \cdot 10^8 \, \frac{m}{s}}{5,8 \cdot 10^9 \, Hz} = 51,72 mm$$

Gemäß einer weiteren bevorzugten Weiterbildung ist der Koppler dazu eingerichtet, eine Phase des dem ersten Eingang und/oder dem zweiten Eingang der Antenne zugeführten oszillierenden Signals um einen vorbestimmten Phasenwinkel, insbesondere um einen Phasenwinkel von 90°, zu verschieben.

Insbesondere wird das oszillierende Signal auf die beiden Eingänge der Antenne mit 0° und 90° Phasenverschiebung zur Erzeugung der stehenden Welle gleichmäßig aufgeteilt. Beispielsweise wird das dem Eingang des Richtkopplers zugeführte Oszillatorsignal an den zwei Ausgängen für die Anspeisung der Antenne bereitgestellt, wobei die beiden Antennenspeisesignale elektrisch um einen Phasenwinkel von 90° verschoben sind.

Der Zweck der elektrisch phasenverschobenen Einspeisung und der geometrisch gedrehten Anspeisung ist insbesondere die zirkulare Polarisation der Antenne bzw. des erzeugten elektromagnetischen Feldes, wodurch eine höhere Detektionsempfindlichkeit unabhängig von der Ausrichtung des Fremdkörpers erzielt wird.

Gemäß einer weiteren bevorzugten Weiterbildung ist der Koppler dazu eingerichtet, die Dämpfung des oszillierenden Signals für die Erfassungseinrichtung derart einzustellen, dass der Pegel des der Erfassungseinrichtung bereitgestellten oszillierenden Signals innerhalb einer Toleranz, insbesondere im Wesentlichen, dem Pegel des durch die Antenne empfangenen Reflexionssignals entspricht. Ein Vorteil dieser Weiterbildung liegt in einer Maximierung der Empfindlichkeit.

Vorteilhaft für eine hohe Empfindlichkeit der Vorrichtung ist insbesondere, dass an der Erfassungseinrichtung das oszillierende Signal und das Reflexionssignal, d.h. das an dem Fremdkörper reflektierte Signal, hinsichtlich ihres Pegels oder ihrer Amplitude annähernd gleich groß sind, insbesondere über den gesamten Frequenzbereich des verwendeten ISM-Bandes. Dies wird insbesondere durch ein entsprechendes Design des Kopplers, insbesondere Richtkopplers, und Kenntnisse über die Reflexionseigenschaften der zu detektierenden Fremdkörper erreicht. Nachdem die Ausgestaltungen der als Ausspäheinrichtungen oder Manipulationseinrichtungen verwendeten Fremdkörper bekannt sind, sind auch ihre Reflexionseigenschaften zumindest im Wesentlichen vorbekannt.

Gemäß einer weiteren bevorzugten Weiterbildung ist der Koppler dazu eingerichtet, den Pegel des oszillierenden Signals für die Erfassungseinrichtung in Abhängigkeit von zu erwartenden Abmessungen des Fremdkörpers, insbesondere einer Ausspäh-Einrichtung, festzulegen.

Gemäß einer weiteren bevorzugten Weiterbildung ist der Koppler dazu eingerichtet, die Dämpfung des oszillierenden Signals für die Erfassungseinrichtung auf einen Wert zwischen 2 dB und 8 dB festzulegen. Insbesondere stellt der Koppler die Dämpfung des oszillierenden Signals für die Erfassungseinrichtung auf 5 dB ein.

Damit ist die Dämpfung durch den Koppler, insbesondere Richtkoppler, hinsichtlich des oszillierenden Signals, das der Erfassungseinrichtung, insbesondere dem Demodulator, zugeführt wird, deutlich geringer als bei herkömmlichen Richtkopplern.

Gemäß einer weiteren bevorzugten Weiterbildung ist der Koppler an seinen Eingängen an den Oszillator, die Antenne und die Erfassungseinrichtung zur Reduzierung von Reflexionen impedanzangepasst.

Gemäß einer weiteren bevorzugten Weiterbildung ist die Patch-Antenne auf einem Substrat mit einer hohen relativen Dielektrizität ausgebildet. Die relative Dielektrizität des Substrats ist insbesondere größer 6 ($\varepsilon_r > 6$). Das Substrat ist zum Beispiel ein Keramiksubstrat.

Zur Herstellung der Patch-Antenne wird vorzugsweise ein Leiterplattenmaterial mit hoher relativer Dielektrizität verwendet, um besonders kompakte Abmessungen erzielen zu können. Die Resonanzfrequenz der Antenne wird vorzugsweise auf die Arbeitsfrequenz abgestimmt, so dass bei dieser eine maximale Abstrahlung erzielt wird. Die Impedanz der Antenneneingänge wird bei der Arbeitsfrequenz vorzugsweise an den Richtkoppler so angepasst, dass die Signalreflexion gering oder minimal ist.

Gemäß einer weiteren bevorzugten Weiterbildung ist die Erfassungseinrichtung dazu eingerichtet, eine Überlagerung des bereitgestellten oszillierenden Signals mit dem vorbestimmten Pegel und des ausgekoppelten Reflexionssignals mit einer Kennlinie eines nichtlinearen Elements zu multiplizieren. Abhängig davon kann der Phasenunterschied zwischen dem bereitgestellten oszillierenden Signal mit dem vorbestimmten Pegel und dem ausgekoppelten Reflexionssignal erfasst werden.

Gemäß einer weiteren bevorzugten Weiterbildung ist das nicht-lineare Element eine Detektordiode. Die Erfassung des Phasenunterschiedes oder die Demodulation erfolgt vorzugsweise an der Detektordiode, welche das Empfangssignal in das Basisband umsetzt.

Gemäß einer weiteren bevorzugten Weiterbildung ist ein der Erfassungseinrichtung nachgeschalteter Tiefpass vorgesehen.

Der nachgeschaltete Tiefpass hat die Funktion, Mischprodukte insbesondere bei der doppelten Frequenz zu eliminieren. Um Temperatureinflüsse auf die Demodulation zu minimieren, werden Schwankungen der Diodenkennlinie der Detektordiode durch Kompensation einer baugleichen und thermisch ausreichend gekoppelten Diode und einer Subtraktion an einem Instrumentenverstärker vorzugsweise ausgeglichen.

Gemäß einer weiteren bevorzugten Weiterbildung ist der Koppler dazu ausgelegt, relativ zu den Abmessungen des zu überwachenden Teils des Dienstleistungsautomaten kleine Fremdkörper, insbesondere Ausspäh-Einrichtungen, zu detektieren.

Ausspäh-Einrichtungen wie Tonköpfe oder Antennenschlaufen sind klein relativ zu dem zu überwachenden Bereich des Dienstleistungsautomaten, beispielsweise dem Kartenmaul.

Gemäß einer weiteren bevorzugten Weiterbildung sind die Frequenz des oszillierenden Signals und die Geometrie der Antenne derart ausgelegt, dass der Überwachungsbereich der Vorrichtung in einem Bereich hoher Empfangs-Empfindlichkeit der Antenne liegt.

Wird die Oszillatorfrequenz und damit die Wellenlänge in einem definierten Bereich zeitlich variiert, so können damit die prinzipbedingten Zonen mit niedriger Detektionsempfindlichkeit räumlich verschoben werden. Damit kann die insgesamt erzielbare Detektionswahrscheinlichkeit erhöht werden.

Die Erfindung wird nachfolgend anhand der in den schematischen Figuren angegebenen Ausführungsbeispiele näher erläutert. Es zeigen:

Fig. 1 ein schematisches Blockschaltbild eines ersten Ausführungsbeispiels einer Vorrichtung zur Überwachung zumindest eines Teils eines Dienstleistungsautomaten;

Fig. 2 ein schematisches Blockschaltbild eines zweiten Ausführungsbeispiels einer Vorrichtung zur Überwachung zumindest eines Teils eines Dienstleistungsautomaten;

Fig. 3 ein Diagramm zur Illustrierung der Detektionswahrscheinlichkeit bzw. der Detektionsempfindlichkeit der Vorrichtung in Abhängigkeit des Abstandes einer Ausspäh-Einrichtung von der Vorrichtung bei einer bestimmten Arbeitsfrequenz;

Fig. 4 einen Betragsgang der Übertragungsfunktion eines Ausführungsbeispiels eines Hybrids als Richtkoppler von Oszillatoreingang auf Demodulator mit angeschlossener Antenne;

Fig. 5 eine schematische Darstellung eines Ausführungsbeispiels für eine Geometrie des Richtkopplers und der Patch-Antenne der Vorrichtung; und

Fig. 6 ein schematisches Ablaufdiagramm eines Ausführungsbeispiels eines Verfahrens zur Detektion eines im Nahbereich eines für die Authentifizierung verwendeten Eingabemittels angebrachten Fremdkörpers..

In allen Figuren sind gleiche bzw. funktionsgleiche Mittel und Einrichtungen - sofern nichts anderes angegeben - mit denselben Bezugzeichen versehen.

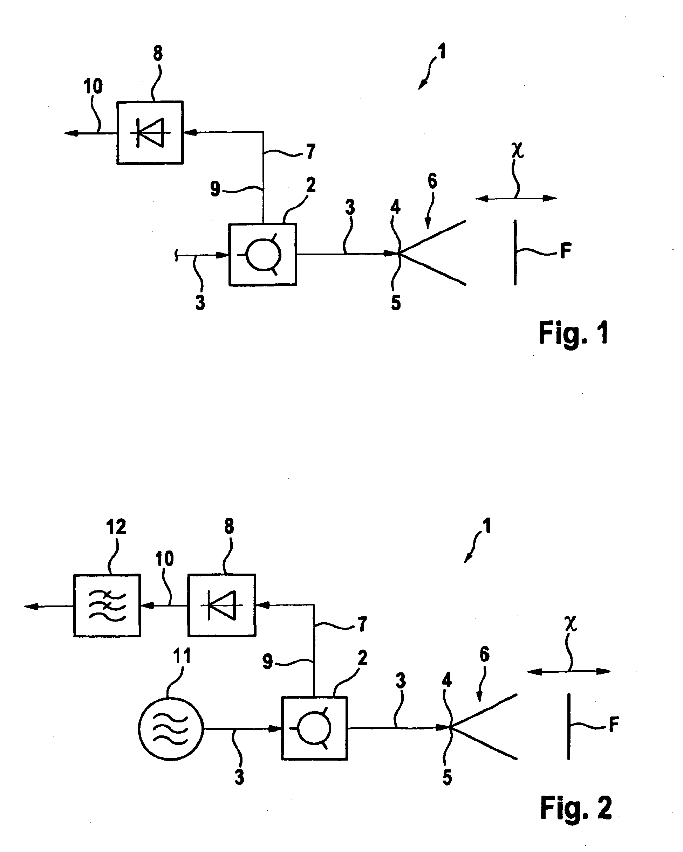

In Fig. 1 ist ein schematisches Blockschaltbild eines ersten Ausführungsbeispiels einer Vorrichtung 1 zur Überwachung zumindest eines Teils eines Dienstleistungsautomaten dargestellt. Beispielsweise ist die Vorrichtung 1 in einem Kartenmaul eines Dienstleistungsautomaten angeordnet.

Die Vorrichtung 1 hat einen Koppler 2, welcher dazu eingerichtet ist, ein oszillierendes Signal 3 den Eingängen 4, 5 einer Antenne 6 zur Erzeugung einer stehenden, zirkular polarisierten Welle zuzuführen. Hiermit wird ein in dem Dienstleistungsautomaten unerlaubt angeordneter oder eingegebrachter Fremdkörper F detektiert. In Fig.1 ist der Abstand zwischen der Antenne 6 der Vorrichtung 1 und dem Fremdkörper F mit X referenziert.

Dabei ist der Koppler 2 insbesondere als ein Richtkoppler ausgebildet. Der Richtkoppler 2 ist dazu ausgelegt, eine Phase des dem ersten Eingang 4 und/oder dem zweiten Eingang 5 der Antenne 6 zugeführten oszillierenden Signals 3 um einen vorbestimmten Phasenwinkel, beispielsweise 90°, zu verschieben. Das oszillierende Signal wird beispielsweise auf die beiden Eingänge 4, 5 der Antenne 6 mit 0° und 90° Phasenverschiebung zur Erzeugung der stehenden, zirkular polarisierten Welle gleichmäßig aufgeteilt.

Des Weiteren führt der Richtkoppler 2 das oszillierende Signal 7 mit einem vorbestimmten Pegel einem Demodulator 8 zu. Dabei stellt der Richtkoppler 2 eine Dämpfung des oszillierenden Signals 7 für den Demodulator 8 derart ein, dass der Pegel des dem Demodulator 8 zugeführten oszillierenden Signals 7 innerhalb einer Toleranz dem Pegel des durch die Antenne 6 empfangenen Reflexionssignals 9 entspricht. Dabei wird der Pegel des oszillierenden Signals 7 für den Demodulator 8 insbesondere in Abhängigkeit von den zu erwartenden Abmessungen der Fremdkörper F eingestellt. Beispielsweise wird die Dämpfung des oszillierenden Signals 7 für den Demodulator 8 auf einen Wert zwischen 2 dB und 8 dB, bevorzugt auf 5 dB, eingestellt.

Der Richtkoppler 2 ist dazu eingerichtet, einen Phasenunterschied zwischen dem zugeführten oszillierenden Signal 7 mit dem vorbestimmten Pegel und dem ausgekoppelten Reflexionssignal 9 zur Detektion des Fremdkörpers F zu erfassen. Ferner ist der Demodulator 8 insbesondere dazu ausgelegt, eine Überlagerung des bereitgestellten oszillierenden Signals 7 mit dem vorbestimmten Pegel und des ausgekoppelten Reflexionssignals 9 mit einer Kennlinie eines nicht-linearen Elements zu multiplizieren und abhängig davon ausgangsseitig ein Signal zur Angabe des Phasenunterschieds 10 zu bereitzustellen. Weiters ist das Signal zur Angabe des Phasenunterschieds 10 dazu geeignet, ein Ergebnissignal zur Detektion des Fremdkörpers einer nachgeschalteten Auswerteeinheit bereitzustellen.

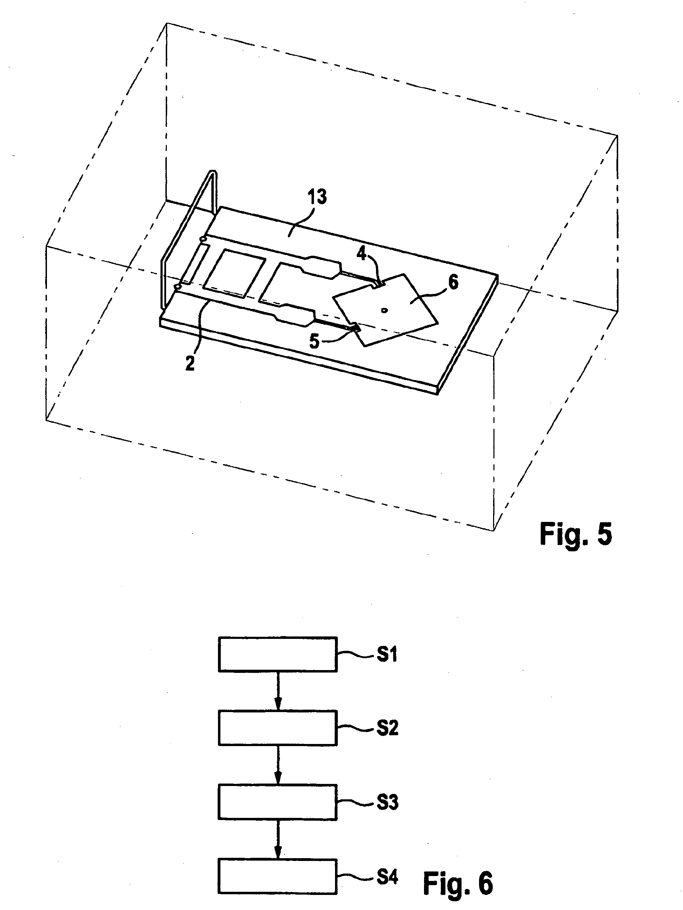

Die Antenne 6 ist beispielsweise als eine zirkular polarisierte Patch-Antenne ausgebildet. Die Patch-Antenne 6 ist beispielsweise auf einem Keramiksubstrat 13 mit hoher relativer Dielektrizität oder hoher Dielektrizitätszahl gedruckt (siehe Fig. 5). Die relative Dielektrizität des Keramiksubstrates 13 ist vorzugsweise größer als 6 ($\varepsilon_r > 6$).

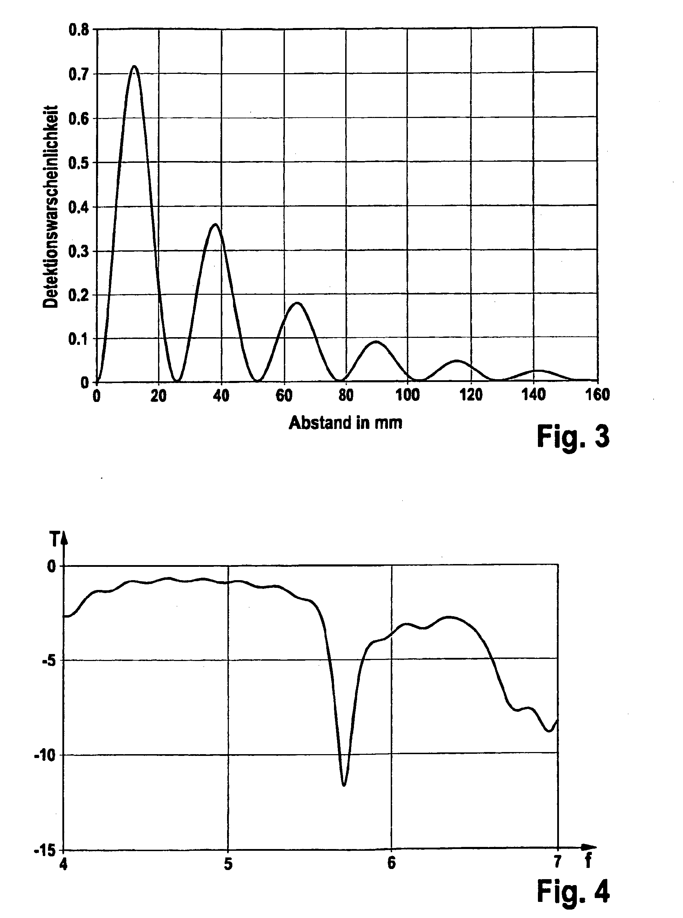

Die Frequenz des oszillierenden Signals 3 und die Geometrie der Antenne 6 sind insbesondere derart ausgelegt, dass der Überwachungsbereich der Vorrichtung 1 in einem Bereich hoher Empfangsempfindlichkeit der Antenne 6 liegt. Hierzu zeigt die Fig. 3 ein Diagramm zur Illustrierung der Detektionswahrscheinlichkeit der Vorrichtung 1 in Abhängigkeit des Abstandes einer Ausspäheinrichtung von der Vorrichtung 1.

Die Fig. 2 zeigt ein schematisches Blockschaltbild eines zweiten Ausführungsbeispiels der Vorrichtung 1 zur Überwachung zumindest eines Teils eines Dienstleistungsautomaten. Die Vorrichtung 1 der Fig. 2 weist sämtliche Merkmale der Vorrichtung 1 der Fig. 1 auf. Diese Übereinstimmungsmerkmale werden zur Vermeidung von Wiederholungen nicht erneut erläutert. Des Weiteren hat die Vorrichtung 1 einen Oszillator 11 und einen Tiefpass 12. Der Oszillator 11 ist mit dem Richtkoppler 2 gekoppelt und stellt das oszillierende Signal 3 bereit. Der Tiefpass 12 ist dem Demodulator 8 nachgeschaltet.

Mit Bezug zu Fig. 2 zeigt die Fig. 4 einen Betragsgang der Übertragungsfunktion eines Ausführungsbeispiels eines Hybrids als Richtkoppler 2 vom Oszillatoreingang des Oszillators 11 auf den Demodulatorausgang des Demodulators 8 mit der Antenne 6. Dabei zeigen die x-Achse der Fig. 4 die Frequenz f und die y-Achse den Betragsgang der Übertragungsfunktion T. Demnach ist der Richtkoppler 2 als ein 90°-Hybrid realisiert, der im Frequenzbereich etwas verstimmt ist, um die in Fig. 4 dargestellte Übertragungsfunktion zwischen dem Oszillatoreingang des Oszillators 11 und dem Demodulatorausgang des Demodulators 8 des Hybrids zu erreichen. Dabei beträgt die elektrische Länge jedes Zweigs des Hybrids $\lambda/4$. Das Minimum des Betragsgangs der Übertragungsfunktion liegt unterhalb des eigentlichen Arbeitsbereiches von beispielsweise 5,725 GHz bis 5,875 GHz. In dem Beispiel nach Fig.4 liegt das Minimum bei etwa 5,6 GHz. Vorteilhaft für eine hohe Empfindlichkeit ist dabei insbesondere, dass der Pegel des Signals am Demodulatorausgang des Hybrids im verwendeten Frequenzbereich möglichst konstant gehalten wird und im Vergleich zu einem herkömmlichen 90°-Hybrid einen höheren Pegel am Demodulatorausgang aufweist.

Die Fig. 5 zeigt eine schematische Darstellung eines Ausführungsbeispiels für eine Geometrie des Richtkopplers 2 und der Patch-Antenne 6. Der Richtkoppler 2 und die Patch-Antenne 6 sind auf einem Keramiksubstrat 13 mit hoher relativer Dielektrizität gedruckt. Die hohe relative Dielektrizität sichert insbesondere eine entsprechend kleine Geometrie der Patch-Antenne 6 und damit die kompakte Baugröße. Die zirkulare Polarisation der Patch-Antenne 6 wird durch eine Speisung mit dem um 90° phasenverschobenen Signal an den beiden Seiten des Patches erreicht (vgl. hierzu die Fig. 1 und 2, Bezugzeichen 4 und 5).

Die Fig. 6 illustriert ein schematisches Ablaufdiagramm eines Ausführungsbeispiels eines Verfahrens zur Detektion eines im Nahbereich eines für die Authentifizierung verwendeten Eingabemittels angebrachten Fremdkörpers.

In Schritt S1 wird ein oszillierendes Signal an die beiden Eingänge einer Antenne zur Erzeugung einer stehenden, zirkular polarisierten Welle zugeführt.

In Schritt S2 wird das oszillierende Signal mit einem vorbestimmten Pegel, insbesondere mit einem gedämpften Pegel einer Erfassungseinrichtung zugeführt.

In Schritt S3 wird ein mittels der Antenne empfangenes Reflexionssignal an die Erfassungseinrichtung ausgekoppelt. Das Reflexionssignal ergibt sich vorzugsweise durch eine Reflexion der stehenden Welle an dem Fremdkörper.

In Schritt S4 wird ein Phasenunterschied zwischen dem zugeführten oszillierenden Signal mit dem vorbestimmten Pegel und dem ausgekoppelten Reflexionssignal zur Detektion des Fremdkörpers erfasst.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar.

BEZUGSZEICHENLISTE

| | |
|---|---|
| 1 | Vorrichtung |
| 2 | Koppler, insbesondere Richtkoppler |
| 3 | oszillierendes Signal, insbesondere Oszillatorsignal |
| 4 | Eingang |
| 5 | Eingang |
| 6 | Antenne |
| 7 | oszillierendes Signal mit einem vorbestimmten Pegel |
| 8 | Erfassungseinrichtung, insbesondere Demodulator |
| 9 | Reflexionssignal |
| 10 | Signal zur Angabe des Phasenunterschieds |
| 11 | Oszillator |

12        Tiefpass

13        Keramiksubstrat

F        Fremdkörper

S1-S4    Verfahrensschritt

X        Abstand

**Patentansprüche**

1. Vorrichtung (1) zur Detektion eines im Nahbereich eines für die Identifizierung und/oder Authentifizierung verwendeten Eingabemittels angebrachten Fremdkörpers (F), mit:

   einem Koppler (2), welcher dazu eingerichtet ist, ein oszillierendes Signal (3) den beiden Eingängen (4, 5) einer Antenne (6) zur Erzeugung einer stehenden Welle zuzuführen, das oszillierende Signal mit einem vorbestimmten Pegel (7) einer Erfassungseinrichtung (8) zuzuführen und ein mittels der Antenne (6) empfangenes Reflexionssignal (9) für die Erfassungseinrichtung (8) auszukoppeln, und
   einen Phasenunterschied zwischen dem zugeführten oszillierenden Signal mit dem vorbestimmten Pegel (7) und dem ausgekoppelten Reflexionssignal (9) zur Detektion des Fremdkörpers (F) zu erfassen, **dadurch gekennzeichnet,**
   **dass** die Antenne (6) als eine Patch-Antenne zur Erzeugung einer stehenden, zirkular polarisierten Welle mit einer in einem Überwachungsbereich der Vorrichtung (1) konstanten Abstrahlcharakteristik ausgebildet ist.

2. Vorrichtung nach Anspruch 1,
   **dadurch gekennzeichnet,**
   **dass** ein Oszillator (11) zur Bereitstellung des oszillierenden Signals (3) vorgesehen ist, welcher mit dem Koppler (2) gekoppelt ist.

3. Vorrichtung nach Anspruch 2,
   **dadurch gekennzeichnet,**
   **dass** der Oszillator (11) abstimmbar ist.

4. Vorrichtung nach einem der Ansprüche 1 bis 3,
   **dadurch gekennzeichnet,**
   **dass** der Koppler (2) dazu eingerichtet ist, eine Phase des dem ersten Eingang (4) und/oder dem zweiten Eingang (5) der Antenne (6) zugeführten oszillierenden Signals (3) um einen vorbestimmten Phasenwinkel, insbesondere um einen Phasenwinkel von 90°, zu verschieben.

5. Vorrichtung nach einem der Ansprüche 1 bis 4,
   **dadurch gekennzeichnet,**
   **dass** der Koppler (2) dazu eingerichtet ist, die Dämpfung des oszillierenden Signals (7) für die Erfassungseinrichtung (8) derart einzustellen, dass der Pegel des der Erfassungseinrichtung (8) bereitgestellten oszillierenden Signals (7) innerhalb einer Toleranz dem Pegel des durch die Antenne (6) empfangenen Reflexionssignals (9) entspricht.

6. Vorrichtung nach Anspruch 5,
   **dadurch gekennzeichnet,**
   **dass** der Koppler (2) dazu eingerichtet ist, den Pegel des oszillierenden Signals (7) für die Erfassungseinrichtung (8) in Abhängigkeit von zu erwartenden Abmessungen des Fremdkörpers (F), insbesondere einer Ausspäh-Einrichtung, festzulegen.

7. Vorrichtung nach einem der Ansprüche 1 bis 6,
   **dadurch gekennzeichnet,**
   **dass** der Koppler (2) dazu eingerichtet ist, die Dämpfung des oszillierenden Signals (7) für die Erfassungseinrichtung (8) auf einen Wert zwischen 2 dB und 8 dB, bevorzugt auf 5 dB, festzulegen.

8. Vorrichtung nach einem der Ansprüche 2 bis 7,
   **dadurch gekennzeichnet,**
   **dass** der Koppler (2) an seinen Eingängen an den Oszillator (11), die Antenne (6) und die Erfassungseinrichtung (8) zur Reduzierung von Reflexionen impedanzangepasst ist.

9. Vorrichtung nach Anspruch 1,
   **dadurch gekennzeichnet,**
   **dass** die Patch-Antenne (6) auf einem Substrat (13) mit einer relativen Dielektrizität $\varepsilon_r$ größer 6 ausgebildet ist.

10. Vorrichtung nach einem der Ansprüche 1 bis 9,
    **dadurch gekennzeichnet,**
    **dass** die Erfassungseinrichtung (8) dazu eingerichtet ist, eine Überlagerung des bereitgestellten oszillierenden Signals mit dem vorbestimmten Pegel (7) und des ausgekoppelten Reflexionssignals (9) mit einer Kennlinie eines nicht-linearen Elements zu multiplizieren und abhängig davon den Phasenunterschied zu erfassen.

11. Vorrichtung nach einem der Ansprüche 1 bis 10,
    **dadurch gekennzeichnet,**
    **dass** der Koppler (2) dazu ausgelegt ist, relativ zu den Abmessungen des zu überwachenden Teils des Dienstleistungsautomaten kleine Fremdkörper, insbesondere Ausspäh-Einrichtungen, zu detektieren.

12. Vorrichtung nach einem der Ansprüche 1 bis 11,
    **dadurch gekennzeichnet,**
    **dass** die Frequenz des oszillierenden Signals (3)

und die Geometrie der Antenne (6) derart ausgelegt sind, dass der Überwachungsbereich der Vorrichtung (1) in einem Bereich hoher Empfangs-Empfindlichkeit der Antenne (6) liegt.

13. Eingabemittel mit zumindest einer baulich integrierten Vorrichtung (1) zur Detektion eines im Nahbereich des Eingabemittels eines Identifizierungssystems oder eines Authentifizierungssystems angebrachten Fremdkörpers (F) nach einem der Ansprüche 1 bis 12.

14. Dienstleistungsautomat mit zumindest einer Vorrichtung (1) zur Detektion eines im Nahbereich eines Eingabemittels des Dienstleistungsautomaten angebrachten Fremdkörpers (F) nach einem der Ansprüche 1 bis 12.

15. Verfahren zur Detektion eines im Nahbereich eines für die Identifizierung und/oder Authentifizierung verwendeten Eingabemittels angebrachten Fremdkörpers, mit den Schritten:

Zuführen (S1) eines oszillierenden Signals an die beiden Eingänge einer Antenne zur Erzeugung einer stehenden Welle,
Zuführen (S2) des oszillierenden Signals mit einem vorbestimmten Pegel einer Erfassungseinrichtung,
Auskoppeln (S3) eines mittels der Antenne empfangenen Reflexionssignal an die Erfassungseinrichtung, und
Erfassen (S4) eines Phasenunterschieds zwischen dem zugeführten oszillierenden Signal mit dem vorbestimmten Pegel und dem ausgekoppelten Reflexionssignal durch die Erfassungseinrichtung zur Detektion des Fremdkörpers, **dadurch gekennzeichnet, dass** die Antenne als eine Patch-Antenne zur Erzeugung einer stehenden, zirkular polarisierten Welle mit einer in einem Überwachungsbereich der Vorrichtung konstanten Abstrahlcharakteristik ausgebildet ist.

**Claims**

1. Apparatus (1) for detecting a foreign object (F) mounted in the vicinity of an input means used for identification and/or authentication, comprising:

a coupler (2) that is arranged to supply an oscillating signal (3) to the two input ports (4, 5) of an antenna (6) for generating a standing wave, to supply the oscillating signal with a predetermined level (7) to a detection device (8) and to decouple a reflection signal (9) for the detection device (8) received by the antenna (6), and to detect a phase difference between the supplied oscillating signal with the predetermined level (7) and the decoupled reflection signal (9) in order to detect the foreign object (F),
**characterized in that**
the antenna (6) is a patch antenna for generating a standing, circularly polarized wave with emission characteristics that are constant in a monitoring range of the apparatus (1).

2. Apparatus according to claim 1,
**characterized in that**
an oscillator (11) for providing the oscillating signal (3) is provided, the oscillator (11) being coupled with the coupler (2).

3. Apparatus according to claim 2,
**characterized in that**
the oscillator (11) is tunable.

4. Apparatus according to any of claims 1 to 3,
**characterized in that**
the coupler (2) is adapted to shift a phase of the oscillating signal (3) that is supplied to the first input port (4) and/or the second input port (5) of the antenna (6) by a predetermined phase angle, in particular by a phase angle of 90°.

5. Apparatus according to any of claims 1 to 4,
**characterized in that**
the coupler (2) is arranged to adjust the damping of the oscillating signal (7) for the detection device (8) in such a manner that the level of the oscillating signal (7) supplied to the detection device (8) is within a tolerance of the level of the reflection signal (9) received by the antenna (6).

6. Apparatus according to claim 5,
**characterized in that**
the coupler (2) is arranged to set the level of the oscillating signal (7) for the detection device (8) in dependence of the expected dimensions of the foreign object (F), in particular of a skimming device.

7. Apparatus according to any of claims 1 to 6,
**characterized in that**
the coupler (2) is arranged to set the damping of the oscillating signal (7) for the detection device (8) to a value between 2 dB and 8 dB, preferably to 5 dB.

8. Apparatus according to any of claims 2 to 7,
**characterized in that**
in order to reduce reflections, the coupler (2) is impedance matched at its input ports to the oscillator (11), the antenna (6) and the detection device (8).

9. Apparatus according to claim 1,
**characterized in that**

the patch antenna (6) is formed on a substrate (13) with a relative dielectricity $\varepsilon_r$ greater than 6.

10. Apparatus according to any of claims 1 to 9, **characterized in that** the detection device (8) is arranged to multiply an overlap between the supplied oscillating signal having the predetermined level (7) and the decoupled reflection signal (9) with a characteristic curve of a non-linear element, and to determine the phase difference in dependence thereof.

11. Apparatus according to any of claims 1 to 10, **characterized in that** the coupler (2) is arranged to detect foreign objects, in particular skimming devices, that are small in relation to the dimensions of the part of the service machine that is to be monitored.

12. Apparatus according to any of claims 1 to 11, **characterized in that** the frequency of the oscillating signal (3) and the geometry of the antenna (6) are arranged such that the monitoring region of the apparatus (1) is in a region where the reception sensitivity of the antenna (6) is large.

13. Input means comprising at least one structurally integrated apparatus (1) according to any of claims 1 to 12 for detecting a foreign object (F) mounted in the vicinity of the input means of an identification system or authentication system.

14. Service machine comprising at least one apparatus (1) according to any of claims 1 to 12 for detecting a foreign object (F) mounted in the vicinity of the input means of the service machine.

15. Method for detecting a foreign object mounted in the vicinity of an input means used for identification and/or authentication, comprising the steps:

supplying (S1) an oscillating signal to the two input ports of an antenna for generating a standing wave,
supplying (S2) the oscillating wave with a predetermined level to a detection device (8),
decoupling (S3), to the detection device, a reflection signal received by the antenna,
detecting (S4), with the detection device, a phase difference between the supplied oscillating signal with the predetermined level and the decoupled reflection signal in order to detect the foreign object (F),
**characterized in that**
the antenna is a patch antenna for generating a standing, circularly polarized wave with emission characteristics that are constant in a monitoring range of the apparatus.

## Revendications

1. Appareil (1) de détection d'un corps étranger (F) installé à proximité d'un moyen d'entrée utilisé pour l'identification et/ou l'authentification, comportant :

- un coupleur (2), lequel est mis en place pour amener un signal oscillant (3) aux deux entrées (4, 5) d'une antenne (6) afin de générer une onde stationnaire, pour amener à un dispositif de détection (8) le signal oscillant avec un niveau prédéfini (7) et pour découpler pour le dispositif de détection (8) un signal de réflexion (9) reçu au moyen de l'antenne (6), et pour détecter une différence de phase entre le signal oscillant amené avec le niveau prédéfini (7) et le signal de réflexion (9) découplé afin de détecter le corps étranger (F),
**caractérisé en ce**
**que** l'antenne (6) est configurée comme une antenne patch afin de générer une onde stationnaire à polarisation circulaire avec une caractéristique d'émission constante dans une région de surveillance du dispositif (1).

2. Appareil selon la revendication 1, **caractérisé en ce** **qu'**un oscillateur (11) est prévu pour mettre le signal oscillant (3) à disposition, lequel oscillateur (11) est couplé au coupleur (2).

3. Appareil selon la revendication 2, **caractérisé en ce** **que** l'oscillateur (11) est accordable.

4. Appareil selon l'une des revendications 1 à 3, **caractérisé en ce** **que** le coupleur (2) est mis en place pour décaler une phase du signal oscillant (3) amené à la première entrée (4) et/ou à la seconde entrée (5) de l'antenne (6) (3) selon un angle de phase prédéfini, en particulier selon un angle de phase de 90°.

5. Appareil selon l'une des revendications 1 à 4, **caractérisé en ce** **que** le coupleur (2) est mis en place pour régler l'affaiblissement du signal oscillant (7) pour le système de détection (8) de telle sorte que le niveau du signal oscillant (7) fourni pour le dispositif de détection (8) correspond au sein d'une tolérance au niveau du signal de réflexion (9) reçu par l'antenne (6).

6. Appareil selon la revendication 5, **caractérisé en ce** **que** le coupleur (2) est mis en place pour fixer le niveau du signal oscillant (7) pour le dispositif de détection (8) en fonction des dimensions escomptées du corps étranger (F), en particulier d'un dispositif d'espionnage.

7. Appareil selon l'une des revendications 1 à 6, **caractérisé en ce**
que le coupleur (2) est mis en place pour fixer l'affaiblissement du signal oscillant (7) pour le dispositif de détection (8) sur une valeur entre 2 dB et 8 dB, de préférence sur 5 dB.

8. Appareil selon l'une des revendications 2 à 7, **caractérisé en ce**
que le coupleur (2) est adapté en impédance à ses entrées à l'oscillateur (11), à l'antenne (6) et au dispositif de détection (8) pour réduire les réflexions.

9. Appareil selon la revendication 1, **caractérisé en ce**
que l'antenne patch (6) est configurée sur un substrat (13) avec une constante diélectrique relative $\varepsilon_r$ supérieure à 6.

10. Appareil selon l'une des revendications 1 à 9, **caractérisé en ce**
que le dispositif de détection (8) est mis en place pour multiplier une superposition du signal oscillant mis en disposition avec le niveau prédéfini (7) et du signal de réflexion découplé (9) avec une courbe caractéristique d'un élément non-linéaire et pour détecter une différence de phase en fonction de cela.

11. Appareil selon l'une des revendications 1 à 10, **caractérisé en ce**
que le coupleur (2) est conçu pour détecter des corps étrangers, en particulier des dispositifs d'espionnage, petits par rapport aux dimensions du part du distributeur automatique de services qui doit être surveillé.

12. Appareil selon l'une des revendications 1 à 11, **caractérisé en ce**
que la fréquence du signal oscillant (3) et la géométrie de l'antenne (6) sont conçues de telle sorte que la région de surveillance de l'appareil (1) se situe dans une région de sensibilité de réception élevée de l'antenne (6).

13. Moyen d'entrée comportant au moins un appareil (1) intégré en construction pour la détection d'un corps étranger (F) installé à proximité du moyen d'entrée d'un système d'identification ou d'un système d'authentification selon l'une des revendications 1 à 12.

14. Distributeur automatique de services comportant au moins un appareil (1) de détection d'un corps étranger (F) installé à proximité d'un moyen d'entrée du distributeur automatique de services selon l'une des revendications 1 à 12.

15. Procédé de détection d'un corps étranger installé à proximité d'un moyen d'entrée utilisé pour l'identification et/ou l'authentification, comportant les étapes:

> - amener (S1) un signal oscillant aux deux entrées d'une antenne afin de générer une onde stationnaire,
> - amener (S2) à un dispositif de détection le signal oscillant avec un niveau prédéfini,
> - découpler (S3) au dispositif de détection un signal de réflexion reçu au moyen de l'antenne, et
> - détecter (S4) par le dispositif de détection une différence de phase entre le signal oscillant amené avec le niveau prédéfini et le signal de réflexion découplé afin de détecter le corps étranger,
> **caractérisé en ce**
> que l'antenne est configurée comme une antenne patch afin de générer une onde stationnaire à polarisation circulaire avec une caractéristique d'émission constante dans une région de surveillance du dispositif.

EP 2 450 823 B1

Fig. 1

Fig. 2

12

**Fig. 3**

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0015920 B1
- US 5459405 A
- EP 0561124 B1
- EP 1844454 A
- WO 200679769 A
- US 20060169764 A
- US 7479921 B2
- US 6367695 B1
- US 2004026507 A1
- US 7305934 B
- US 6693598 B
- US 6390367 A
- US 7240827 B2